Europäisches Patentamt

European Patent Office

Office européen des brevets

(11) Veröffentlichungsnummer: **0 494 652 A1**

## EUROPÄISCHE PATENTANMELDUNG

(21) Anmeldenummer: **92100177.2**

(22) Anmeldetag: **08.01.92**

(51) Int. Cl.5: **B62H 7/00**, B62H 1/12

(30) Priorität: **09.01.91 DE 9100187 U**

(43) Veröffentlichungstag der Anmeldung:
**15.07.92 Patentblatt 92/29**

(84) Benannte Vertragsstaaten:
**AT BE CH DE DK FR GB IT LI NL SE**

(71) Anmelder: **Weber, Marian**
**Iserlohner Strasse 20**
**W-5990 Altena(DE)**
Anmelder: **Opderbeck, Uwe**
**Kohlhagener Weg 8**
**W-5990 Altena(DE)**

(72) Erfinder: **Weber, Marian**
**Iserlohner Strasse 20**
**W-5990 Altena(DE)**
Erfinder: **Opderbeck, Uwe**
**Kohlhagener Weg 8**
**W-5990 Altena(DE)**

(74) Vertreter: **Schröter, Martin, Dipl.-Ing.**
**Im Tückwinkel 22**
**W-5860 Iserlohn(DE)**

(54) **Stützvorrichtung für ein Kinderfahrrad.**

(57) Vorgeschlagen wird eine Stützvorrichtung für ein Kinderfahrrad, bestehend aus an beiden Seiten der Hinterradachse befestigbaren Stützarmen 21, an denen ein das Stützrad 24 aufnehmender Auslegerarm 22 begrenzt vertikal verschwenkbar angelenkt ist, wobei zwischen dem Stützarm 21 und dem Auslegerarm 22 eine eine Rückstellfeder bildende Zugfeder 6 angeordnet ist.

Die Erfindung betrifft eine Stützvorrichtung für ein Kinderfahrrad, bestehend aus an beiden Seiten der Hinterradachse befestigbaren Stützarmen, an denen gegen die Wirkung einer in ihrer Federkraft einstellbaren Rückstellfeder ein Stützrad begrenzt vertikal verschwenkbar gelagert ist.

Eine derartige Stützvorrichtung für ein Kinderfahrrad ist aus der US-PS 2 450 979 bekannt. Sie dient zur Stabilisierung des Fahrrades während der Benutzung durch ungeübte Personen und erleichtert das Erlernen des Zweiradfahrens. In der Regel wird die Stützvorrichtung nach der Beherrschung des Zweirades entfernt. Bei der bekannten Stützvorrichtung ist auf der nach außen verlängerten Achse der Hinterradnabe ein Stützarm befestigt, der nach unten abgewinkelt ist und im Bereich dieser Abwinklung eine als Ausleger dienende Achse für ein Stützrad aufnimmt. Diese Achse ist dabei vertikal begrenzt verschwenkbar mit ihrem inneren Ende in einer entsprechend bemessenen Bohrung des Stützarmes gelagert und in einer gabelförmigen Aufnahme der Abwinklung des Stützarmes in vertikale Richtung geführt. Zwischen Stützrad und einer an der Nabenachse befestigten Lasche stützt sich eine in ihrer Federkraft einstellbare Rückstellfeder ab, die das Rad bzw. seine Achse nach unten auf den Boden zu drückt. Bei einer Kurvenlage oder beim Überfahren einer Bodenerhöhung kann infolge dieser Lagerung das jeweilige Stützrad in vertikaler Richtung verschwenken. Neigt sich die Benutzungsperson bei einer Kurvenfahrt in die entsprechende Kurvenrichtung, so wirkt der Schwerkraft die Kraft der Rückstellfeder entgegen. Als nachteilig erweisen sich die aufwendige Konstruktion einer solchen Stützvorrichtung und deren Verletzungsgefahren bietende Konstruktionselemente, beispielsweise die herausragende Federachse und die an der Nabenachse befestigte Lasche. Außerdem ist die Lagerung der Stützradachse in Fahrtrichtung gesehen wenig stabil, da die Lagerung des inneren Achsendes in der Bohrung im Stützarm ein erhebliches Spiel erfordert.

Die Aufgabe der Erfindung besteht darin, eine solche Stützvorrichtungskonstruktion zu verbessern und unfallsicherer zu gestalten.

Gelöst wird die Erfindungsaufgabe mit einer Stützvorrichtung mit sämtlichen Merkmalen des Anspruchs 1.

Infolge der Anlenkung eines Auslegerarmes an dem Stützarm ergibt sich in Fahrtrichtung gesehen eine sichere Lagerung des Stützrades, welches exakt nur in vertikaler Richtung begrenzt verschwenkbar ist. Der Schwenkarm selbst kann an jedem vorhandenen Ende der Nabenachse befestigt werden, sodaß es einer Verlängerung dieser Nabenachse nicht bedarf. Die in ihrer Federkraft in einfacher Weise einstellbare Zugfeder liegt abgedeckt zwischen Auslegerarm und Stützarm und bildet daher keine Verletzungsgefahr.

Nach einer bevorzugten Ausführungsart der Erfindung ist die Federkraft zwischen dem bogenförmigen Auslegerarm und dem an seinem unteren Ende stumpfwinklig abgewinkelten Stützarm angeordnet. Die Zugfeder ist mit einem Ende in einer Öse am Auslegerarm und mit ihrem anderen Ende an einem Gewindebolzen eingehakt, der durch den Stützarm hindurchgeführt ist, und auf den von der Außenseite zur Einstellung der Federkraft eine Rändelmutter aufgeschraubt ist. Hierdurch ergibt sich eine günstige Anordnung der als Rückstellfeder dienenden Zugfeder.

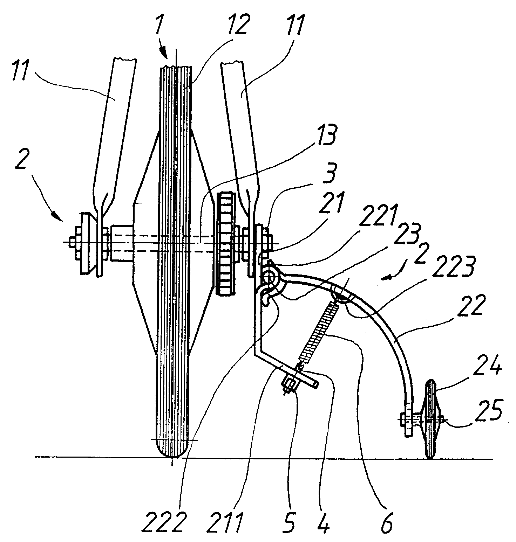

Weitere Merkmale der Erfindung und deren Vorteile werden im folgenden anhand eines abgebildeten Ausführungsbeispieles erläutert. Die Abbildung zeigt die Teilansicht eines Hinterrades eines Kinderfahrrades, an dem an einer Seite die erfindungsgemäße Stützvorrichtung erkennbar ist, die ebenfalls an der anderen Radseite vorgesehen wird.

Das Rad 12 eines insgesamt mit der Ziffer 1 bezeichneten Kinderfahrrades ist in der Gabel 12 mit seiner Nabe 13 bzw. seiner Achse festgesetzt. Jeweils an beiden Enden der herausragenden Achse sind insgesamt mit der Ziffer 2 bezeichnete Stützvorrichtungen aufgesetzt und mittels Muttern 3 befestigt.

Eine solche Stützvorrichtung 2 besteht jeweils aus dem nach unten gerichteten, endseitig stumpfwinklig abgewinkelten Stützarm 21 und einem daran in vertikaler Richtung begrenzt verschwenkbaren bogenförmigen Auslegerarm 22, der an seinem unteren Ende ein Stützrad 24 mit seiner Achse 25 aufnimmt. Der Schwenkbereich des Auslegerarmes 22 wird begrenzt durch die an seinem inneren Ende oben und unten angeformten Anschläge 221 und 222, die gegen den Stützarm 21 wirken. Zwischen Auslegerarm 22 und der unteren Abwinklung 211 des Stützarmes 21 ist eine als Rückstellfeder wirkende Zugfeder 6 eingesetzt. Diese Zugfeder 6 ist mit ihrem oberen Ende in einer Öse 223 am Auslegerarm 22 gehalten. Ihr unteres Ende ist in einem Gewindebolzen 4 eingehakt, der durch eine Bohrung im Stützarmende 211 hindurchragt. Auf das hindurchragende Ende ist eine Rändelmutter 5 aufgeschraubt, über die die Vorspannung der Zugfeder 6 eingestellt werden kann. Zweckmäßigerweise ist der Gewindebolzen 4 verdrehungsgesichert durch das Stützarmende 211 hindurchgeführt, jedoch in Achsrichtung verschiebbar.

Mittels entsprechender Ausbildung am Stützarm 21 und des Endes des Auslegerarmes 22 ist das mit der Ziffer 23 bezeichnete Gelenk gebildet, welches die Verschwenkung des Auslegerarmes 22 in vertikaler Richtung ermöglicht. Die Zugfeder 6 zieht jeweils das Stützrad 24 nach unten und bewirkt eine Gegenkraft bei entsprechender Neigung des Rades 12.

Die gesamte Stützvorrichtung 2 kann zur weiteren Absicherung von Verletzungsgefahren gehäuseartig abdeckbar sein, wobei die Rändelmutter 5 leicht zugänglich angeordnet sein muß, um die jeweilige Einstellung der Federkraft der Zugfeder 6 zu ermöglichen. Durch jeweils entsprechende Einstellung dieser Federkraft wird die lernende Benutzungsperson an mehr oder weniger starke Rückstellkräfte gewöhnt und erlernt damit zunehmend die Beherrschung des Zweirades ohne Abstützung.

Eine Höhenverstellbarkeit der Stützvorrichtung 2 kann erreicht werden durch mehrere Bohrungen im Stützarm 21 oder durch Versetzen des Stützrades 24 mit seiner Achse 25 im unteren Ende des Auslegerarmes 22.

Es ist zweckmäßig, die Rändelmutter 5 gegen unbeabsichtigtes Abschrauben auf dem Gewindebolzen 4 zu sichern.

Zusammenstellung der Bezugszeichen

| | |
|---|---|
| 1 | Fahrrad |
| 11 | Gabel |
| 12 | Rad |
| 13 | Nabe |
| 2 | Stützvorrichtung |
| 21 | Stützarm |
| 211 | Abwinklung |
| 22 | Auslegerarm |
| 221 | Anschlag |
| 222 | Anschlag |
| 223 | Öse |
| 23 | Gelenk |
| 24 | Stützrad |
| 25 | Achse |
| 3 | Mutter |
| 4 | Gewindebolzen |
| 5 | Rändelmutter |
| 6 | Zugfeder |

**Patentansprüche**

1. Stützvorrichtung für ein Kinderfahrrad, bestehend aus an beiden Seiten der Hinterradachse befestigbaren Stützarmen (21), an denen gegen die Wirkung einer in ihrer Federkraft einstellbaren Rückstellfeder (6) ein Stützrad (24) begrenzt vertikal verschwenkbar gelagert ist, **dadurch gekennzeichnet,** daß am Stützarm (21) ein das Stützrad (24) aufnehmender Auslegerarm (22) begrenzt vertikal verschwenkbar angelenkt ist, wobei zwischen dem Stützarm (21) und dem Auslegerarm (22) eine die Rückstellfeder bildende Zugfeder (6) angeordnet ist.

2. Stützvorrichtung nach Anspruch 1, **dadurch gekennzeichnet,** daß die in ihrer Federkraft einstellbare Zugfeder (6) zwischen dem bogenförmigen Auslegerarm (22) und dem an seinem unteren Ende (211) stumpfwinklig abgewinkelten Stützarm (21) angeordnet ist.

3. Stützvorrichtung nach Anspruch 1 oder 2, **dadurch gekennzeichnet,** daß die Zugfeder (6) mit einem Ende in eine Öse (223) am Auslegerarm und mit ihrem anderen Ende an einem Gewindebolzen eingehakt ist, der durch den Stützarm (21, 211) hindurchgeführt ist und auf den von der Außenseite zur Einstellung der Federkraft eine Rändelmutter (5) aufgeschraubt ist.

4. Stützvorrichtung nach Anspruch 3, **dadurch gekennzeichnet,** daß der Gewindebolzen verdrehungsgesichert, jedoch in axialer Richtung verschiebbar durch den Stützarm (21, 211) hindurchgeführt ist.

5. Stützvorrichtung nach einem oder mehreren der vorangegangenen Ansprüche**, dadurch gekennzeichnet,** daß an dem das Gelenk (23) bilden Ende des Auslegerarmes (22) jeweils ein nach oben (221) und ein nach unten gerichteter Anschlag (222) angeformt sind, die zur Begrenzung der vertikalen Verschwenkung des Auslegerarmes (22) gegen den Stützarm (21) wirken.

6. Stützvorrichtung nach Anspruch 1, **dadurch gekennzeichnet,** daß der Stützarm (21) und/oder das Stützrad (24) in der Höhe einrichtbar befestigbar sind.

EP 0 494 652 A1

4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 127 425 (TSUCHIE K.) <br> * Seite 4, Zeile 14 - Seite 10, Zeile 2; Abbildungen 1-7 * | 1 | B62H7/00 <br> B62H1/12 |
| A | | 2,3,6 | |
| X | FR-A-654 471 (LAURENCON FRERES) <br> * das ganze Dokument * | 1 | |
| A | | 2,3 | |
| | --- | | |
| A | FR-A-265 490 (MUNSCH F.) <br> * Seite 1, Zeile 57 - Zeile 85; Abbildung 1 * | 3,4,6 | |

|  | RECHERCHIERTE SACHGEBIETE (Int. Cl.5) |
|---|---|
| | B62H |

Der vorliegende Recherchenbericht wurde für alle Patentansprüche erstellt

| Recherchenort | Abschlußdatum der Recherche | Prüfer |
|---|---|---|
| DEN HAAG | 20 MAERZ 1992 | DENICOLAI G. |